# EUROPÄISCHE PATENTANMELDUNG

(11) **EP 4 498 581 A1**
(43) Veröffentlichungstag der Anmeldung: **29.01.2025**
(21) Anmeldenummer: 23188172.3
(22) Anmeldetag: 27.07.2023
(51) Int. Cl.: H02K 9/22, H02K 9/06, H02K 5/18, H02K 5/20, H02K 3/487

(54) **DYNAMOELEKTRISCHE MASCHINE**

(71) Anmelder: Siemens Aktiengesellschaft, 80333 München (DE)
(72) Erfinder: Hösle, Markus, 91058 Erlangen (DE)
(74) Vertreter: Siemens Patent Attorneys

(57) **Zusammenfassung**

Die Erfindung betrifft eine dynamoelektrische Maschine (10), mit zumindest einem Gehäuse (20) und mit einer Motoreinrichtung (22), welche in dem Gehäuse (20) aufgenommen ist,
dadurch gekennzeichnet, dass
an zumindest einer Komponente des Gehäuses (20) und/oder der Motoreinrichtung (22) zumindest ein pulsierendes Wärmerohr (10) angeordnet ist.

## Beschreibung

Die Erfindung betrifft eine dynamoelektrische Maschine, mit zumindest einem Gehäuse und mit einer Motoreinrichtung, welche in dem Gehäuse aufgenommen ist.

Bei dynamoelektrischen Maschinen, insbesondere großen Maschinen, sind entstehende Verluste bei einem Volumen von V ungefähr L³ entsprechend hoch. Die wärmeabgebende Oberfläche A ist jedoch nur proportional zu L². Damit ist mit verstärktem Kühlaufwand bei dementsprechenden Maschinen zu reagieren. Diese notwendige Kühlleistung wird bisher jedoch ungenügend oder nur vergleichsweise aufwendig bereitgestellt.

Die Kühlproblematik wird bei immer größeren Maschinen durch optimierte, an sich bekannte Luftkühlungen oder verschiedenste Flüssigkeitskühlungen der jeweiligen Komponenten, wie Blechpakete von Stator und Rotor, Wicklungssysteme, oder dergleichen versucht zu lösen. Dies bedarf aber einem immer grö-ßeren konstruktiven Aufwand - auch eine Überwachung der Kühlkomponenten, da bei Ausfall die Maschine abgeschaltet oder nur im Teilbetrieb arbeitet, ist sehr komplex.

Deshalb werden im Stand der Technik passive Kühlungen bevorzugt eingesetzt. So sind auch normale Wärmerohre, insbesondere sogenannte Heatpipes, bekannt, die jedoch die folgenden Probleme beziehungsweise Leistungsgrenzen aufweisen.

Bei Temperaturen innerhalb der Maschine kurz oberhalb der Schmelztemperatur des eingesetzten Fluids ist die Viskosität dieses Fluids am größten und limitiert die Fluidströmung und damit die Leistung der Heatpipe und den damit verbundenen Wärmetransport. Wenn die Dampfströmung am Verdampfer Schallgeschwindigkeit annimmt, wird die Schallgeschwindigkeitsgrenze erreicht. Dann kann die Wärmetransportfähigkeit der Heatpipe durch Druckabsenkungen im Kondensator nicht weiter gesteigert werden, was wiederum die Kühlwirkung beeinflusst.

Bei Erreichen der Wechselwirkungsgrenze wird die Leistung der Heatpipe durch Scherkräfte an der Phasengrenzfläche zwischen dem aufsteigenden Dampf und dem zurückfließenden Kondensat limitiert. Der mit hoher Geschwindigkeit fließende Dampf reißt dabei das zurückfließende Kondensat mit. Es kommt zu einer Stauung des Kondensats innerhalb der Transportzone, zur Flutung des Kondensators und einer Austrocknung des Verdampferbereichs, was die Leistung der Heatpipe und den damit verbundenen Wärmetransport beeinträchtigt.

In einer Heatpipe mit Kapillare muss die Kapillardruckdifferenz der Summe aller Druckabfälle entlang der Fluidströmung entgegenwirken. Ist die Kapillardruckdifferenz nicht ausreichend, um der Summe aller Druckabfälle entgegenzuwirken, wird nicht genügend Kondensat zum Verdampfer zurücktransportiert und die Leistung der Heatpipe bricht ein und die Kühlleistung wird reduziert.

Im Verdampfer kann bei großen Wärmestromdichten Blasensieden auftreten. Bei Heatpipes mit Kapillarstrukturen, wie Sintermetallen oder Netzen, verdrängen die wachsenden Blasen die Flüssigkeit, der Kondensatorrückfluss wird behindert und die Kapillarstruktur trocknet lokal aus. Bei Heatpipes, die das Kondensat mithilfe der Schwerkraft zurück zum Verdampfer transportieren, reicht ab einer gewissen Leistung und Temperatur das Kondensat nicht mehr aus, um den Verdampfer vollständig zu benetzen. Im Extremfall liegt das gesamte Arbeitsfluid dampfförmig vor, sodass keine Leistung durch den Verdampfungs-/Kodensationskreislauf mehr übertragen werden kann. Damit ist nicht nur die Kühlleistung beeinträchtigt sondern auch die möglichen Einbauorte normaler Heatpipes äußerst begrenzt.

Aufgabe der vorliegenden Erfindung ist es, eine dynamoelektrische Maschine zu schaffen, bei welcher eine verbesserte Kühlung einer Komponente der dynamoelektrischen Maschine realisiert werden kann.

Diese Aufgabe wird durch eine dynamoelektrische Maschine gemäß dem unabhängigen Patentanspruch gelöst. Vorteilhafte Ausgestaltungsformen sind in den Unteransprüchen angegeben.

Ein Aspekt der Erfindung betrifft eine dynamoelektrische Maschine, mit zumindest einem Gehäuse und mit einer Motoreinrichtung, welche in dem Gehäuse aufgenommen ist. Es ist dabei vorgesehen, dass an zumindest einer Komponente des Gehäuses und/oder der Motoreinrichtung zumindest ein pulsierendes Wärmerohr angeordnet ist.

Bei dem pulsierenden Wärmerohr handelt es sich insbesondere um eine sogenannte pulsierende Heatpipe. Insbesondere ist vorgesehen, dass die pulsierende Heatpipe in beziehungsweise an der dynamoelektrischen Maschine, insbesondere einer großen dynamoelektrischen Maschine, eingesetzt ist.

Insbesondere die pulsierende Heatpipe wird dabei als Wärmeübertrager von einer Wärmequelle zu einer Wärmesenke und/oder als Wärmespreizer zur Vergleichmäßigung der Wärmelast innerhalb der dynamoelektrischen Maschine beziehungsweise der Komponente eingesetzt.

Dabei wird insbesondere ein feinkapillares Rohrsystem, wärmeleitender Kunststoff, Kupfer oder dergleichen in einer Serpentinenstruktur gebogen und dann wiederum wird eine bestimmte Menge Kältemittel, beispielsweise Wasser oder Ferrofluid in das Vakuumrohr eingeführt. Da der Durchmesser des Rohres klein genug ist, bilden sich unter Einwirkung der Oberflächenspannung viele geschlossene Flüssigkeits- und Blasensäulen im Rohr, die in Abständen angeordnet und im Rohr zufällig verteilt sind. Im Verdampfungsabschnitt absorbiert der Flüssigkeitspfropfen mehr Wärme und drückt den Dampf- und Flüssigkeitstropfen, um zum Niedertemperatur-Kondensationsabschnitt zu fließen. Der Gaspfropfen trifft auf eine kalte Oberfläche und bricht und kehrt zum Verdampfungsabschnitt zurück.

Aufgrund des unterschiedlichen Drucks zwischen den beiden Enden und des Druckungleichgewichts zwischen den benachbarten Rohren führt das Kältemittel somit eine instabile oszillierende Strömung zwischen dem Verdampfungsabschnitt und dem Kondensationsabschnitt durch.

Die Strömungsrichtung ist nicht festgelegt, wodurch die Wärmeübertragung realisiert wird. Während des gesamten Prozesses muss keine externe mechanische und elektrische Energie verbraucht werden und die Eigenschwingung wird vollständig durch Wärme angetrieben, um signifikant Effekte und Wärmeableitungstechnologie zu erzielen. Das pulsierende Wärmerohr hat aufgrund seiner hohen Leistungsfähigkeit, seines geringen Gewichts und seiner einfachen Herstellung einen massiven Vorteil gegenüber herkömmlichen normalen Heatpipes und Wärmeleitungsgeräten.

Beispielsweise kann die Wärmeleitfähigkeit höher sein als bei Kupfer. Des Weiteren ist aus der Literatur bekannt, dass die Wärmeleitfähigkeit eines pulsierenden Wärmerohrs beispielsweise bei 2000 Watt pro Millikelvin liegt.

Somit kann hocheffizient mittels des pulsierenden Wärmerohrs eine Kühlung einer Komponente der dynamoelektrischen Maschine realisiert werden.

Gemäß einer vorteilhaften Ausgestaltungsform ist das pulsierende Wärmerohr plattenförmig oder als gebogene Platte oder als ein einzelnes Rohr ausgebildet. Insbesondere können somit unterschiedliche pulsierende Wärmerohre bereitgestellt werden, welche insbesondere abhängig vom Einsatzort entsprechend ausgebildet sein können. Dadurch kann hochflexibel ein pulsierendes Wärmerohr in der dynamoelektrischen Maschine eingebaut werden.

Eine weitere vorteilhafte Ausgestaltungsform sieht vor, dass eine Vielzahl von pulsierenden Wärmerohren an einer Vielzahl von unterschiedlichen Komponenten in der dynamoelektrischen Maschine angeordnet ist. Insbesondere kann an wärmeerzeugenden Komponenten beziehungsweise Komponenten, die eine Kühlung erfordern, ein entsprechendes pulsierendes Wärmerohr angeordnet werden. Insbesondere kann somit die dynamoelektrische Maschine eine Vielzahl von pulsierenden Wärmerohren aufweisen, welche in unterschiedliche Komponenten der dynamoelektrischen Maschine angeordnet sind. Somit kann hocheffizient die dynamoelektrische Maschine gekühlt werden.

Es hat sich weiterhin als vorteilhaft erwiesen, wenn das pulsierende Wärmerohr bei einer rotierenden Komponente der Motoreinrichtung axial zu einer Rotationsachse der rotierenden Komponente angeordnet ist. Somit können Fliehkräfte innerhalb des Kühlfluids im Wärmerohr vehindert werden, wodurch die Funktionsweise des pulsierenden Wärmerohrs bei einer rotierenden Komponente weiterhin aufrechterhalten ist.

Ebenfalls vorteilhaft ist, wenn das pulsierende Wärmerohr an einem Lagerschild der dynamoelektrischen Maschine als Komponente angeordnet ist. Dabei kann eine Temperaturvergleichmäßigung am Lagerschild und/oder eine Wärmeleitung aus dem Innenraum des Gehäuses, insbesondere wo die Motoreinrichtung angeordnet ist, realisiert werden. Des Weiteren kann eine Wärmeleitung nach außen geschaffen werden, um vorteilhaft zu einer Kühlung zu gelangen.

Ebenfalls vorteilhaft ist, wenn das pulsierende Wärmerohr an einen Lageraußenring der dynamoelektrischen Maschine als Komponente angeordnet ist. Insbesondere kann dabei der Lageraußenring um das Lager verteilt sein, wobei eine Temperaturvergleichmäßigung oder eine Wärmeleitung aus dem Innenraum zu schaffen. Insbesondere kann somit eine Temperaturverbindung zum Außenbereich der dynamoelektrischen Maschine geschaffen werden, wodurch eine Kühlung realisiert werden kann.

Eine weitere vorteilhafte Ausgestaltungsform sieht vor, dass das pulsierende Wärmerohr zumindest bereichsweise durch das Gehäuse in einer Umgebung des Gehäuses geführt ist. Insbesondere kann somit das pulsierende Wärmerohr durch das Gehäuse der dynamoelektrischen Maschine beziehungsweise deren Komponente geführt sein und somit auch für einen explosionsgeschützten Bereich eingesetzt werden, um auch eine nach außen geschlossene dynamoelektrische Maschine beziehungsweise deren Komponenten zu kühlen. Damit kann beispielsweise ein Aufsatzkühler beziehungsweise Sekundärkühler wesentlich kleiner ausgeführt sein.

Ebenfalls vorteilhaft ist, wenn das pulsierende Wärmerohr zwischen einem Blechpaket oder Teilblechpaket eines Stators und/oder Rotors der Motoreinrichtung als Komponente angeordnet ist. Insbesondere ist somit eine Zwischenlage zwischen den Teilblechpaketen beziehungsweise Blechpaketen von Stator und Rotor gebildet. Somit kann auch eine Kühlung der Blechpakete von Stator und Rotor realisiert werden.

In einer weiteren vorteilhaften Ausgestaltungsform ist vorgesehen, dass das pulsierende Wärmerohr an einer Nut der Motoreinrichtung als Komponente angeordnet ist. Somit kann auch eine Nut der Motoreinrichtung entsprechend gekühlt werden.

Hierbei hat es sich weiterhin als vorteilhaft erwiesen, wenn das pulsierende Wärmerohr an einem Nutgrund der Nut und/oder Nutwand der Nut ausgebildet ist. Insbesondere in den Nuten, beispielsweise am Nutgrund und/oder an zumindest einer Nutwand, von Rotor und/oder Stator, insbesondere bei Hochspannungsmaschinen, kann somit zuverlässig die Wärme an der Nut über das pulsierende Wärmerohr abgeführt werden.

Weiterhin vorteilhaft ist, wenn das pulsierende Wärmerohr als Nutverschluss einer Nut der Motoreinrichtung als Komponente ausgebildet ist. Somit kann auch der Nutverschluss der Nut entsprechend vorteilhaft gekühlt werden.

Gemäß einer weiteren vorteilhaften Ausgestaltungsform ist das pulsierende Wärmerohr an einer Stromrichtereinrichtung der dynamoelektrischen Maschine als Komponente angeordnet. Somit kann beispielsweise auch die Stromrichtereinrichtung, welche beispielsweise Strom für die dynamoelektrische Maschine entsprechend richtet, gekühlt werden. Insbesondere können somit die entsprechenden Wandlerkomponenten innerhalb der Stromrichtereinrichtung gekühlt werden.

Es hat sich weiterhin als vorteilhaft erwiesen, wenn das pulsierende Wärmerohr als Kühlzwischenplatte zwischen der Stromrichtereinrichtung und der Motoreinrichtung ausgebildet ist. Insbesondere kann somit bei einem direkt an eine dynamoelektrische Maschine angebauten Stromrichter, axial oder radial, insbesondere als Kühlzwischenplatte auch zur thermischen Abschirmung, zwischen dem Wechselstromrichtermodul und/oder der Maschine eine Kühlung durchgeführt werden.

Weiterhin vorteilhaft ist, wenn das pulsierende Wärmerohr als ein Wärmetauscher für eine Schleifringeinrichtung der Motoreinrichtung als Komponente ausgebildet ist. Insbesondere kann somit ein Wärmetauscher im Schleifringkörper bereitgestellt werden, welcher einen zuverlässigen Wärmeübertrag innerhalb der dynamoelektrischen Maschine realisieren kann.

Ebenfalls vorteilhaft ist, wenn das pulsierende Wärmerohr ein Ferrofluid aufweist, welches in Abhängigkeit von einem Steuersignal einer elektronischen Recheneinrichtung eines pulsierenden Wärmerohrs zu- oder abgeschaltet ist. Insbesondere kann somit durch Anlegen eines Magnetfelds das Ferrofluid entsprechend beeinträchtigt werden und somit an- beziehungsweise abgeschaltet werden. Somit kann eine Steuerung der Kühlleistung realisiert werden.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: ein schematisches Blockschaltbild gemäß einer Ausführungsform eines pulsierenden Wärmerohrs;
- FIG 2: eine schematische Schnittansicht einer Ausführungsform einer dynamoelektrischen Maschine;
- FIG 3: ein Querschnitt durch eine dynamoelektrische Maschine;
- FIG 4: eine schematische Schnittansicht einer Ausführungsform einer Nut;
- FIG 5: eine weitere schematische Schnittansicht einer Ausführungsform einer Nut;
- FIG 6: eine nochmals weitere schematische Perspektivansicht gemäß einer Ausführungsform einer Nut;
- FIG 7: eine weitere schematische Schnittansicht durch eine dynamoelektrische Maschine;
- FIG 8: eine schematische Schnittansicht durch einen Aufsatzkühler/Sekundärkühler mit herausragenden Kondensationszonen;
- FIG 9: eine schematische Perspektivansicht gemäß einer Ausführungsform einer dynamoelektrischen Maschine; und
- FIG 10: eine schematische Darstellung eines Schleifringkörpers einer dynamoelektrischen Maschine.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

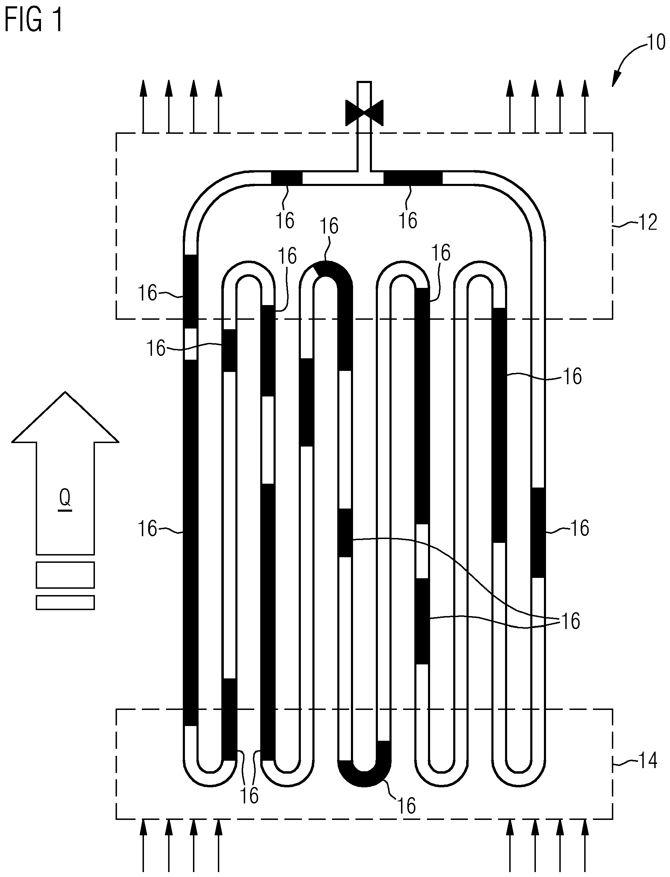

FIG 1 zeigt ein schematisches Blockschaltbild gemäß einer Ausführungsform eines Wärmerohrs 10. Das pulsierende Wärmerohr 10 weist dabei eine Kaltseite 12 sowie eine Warmseite 14 auf. Des Weiteren sind Flüssigkeitsblasen 16 gezeigt, welche sich in dem Rohr befinden.

Insbesondere zeigt somit die FIG 1 das feinkapillare Rohrsystem, welches eine Serpentinenstruktur aufweist und im Inneren ein Kältemittel, beispielsweise Wasser oder Ferrofluid aufweist. Da der Durchmesser des Rohres sehr klein ist, bilden sich unter Einwirkung der Oberflächenspannung viele geschlossene Flüssigkeitsblasen 16, die in Abständen angeordnet im Rohr zufällig verteilt sind. Im Verdampfungsabschnitt, insbesondere auf der Heißseite 14, absorbiert der Flüssigkeitstropfen mehr Wärme und drückt den Dampf- und Flüssigkeitspfropfen um zum Niedertemperatur-Kondensationsabschnitt, insbesondere der Kaltseite 14, zu fließen. Der Gaspfropfen trifft auf eine kalte Oberfläche und bricht und kehrt zum Verdampfungsabschnitt zurück. Aufgrund des unterschiedlichen Drucks zwischen den beiden Enden und des Druckungleichgewichts zwischen den benachbarten Rohren führt das Kältemittel somit eine instabile oszillierende Strömung zwischen dem Verdampfungsabschnitt und dem Kondensationsabschnitt durch.

Die Strömungsrichtung ist nicht festgelegt, wodurch die Wärmeübertragung realisiert wird. Während des gesamten Prozesses wird keine zusätzliche mechanische und elektrische Energie verbraucht und die Eigenschwingung wird vollständig durch Wärme angetrieben, um signifikante Effekte und Wärmeableitungstechnologie zu erzielen. Das pulsierende Wärmerohr 10 hat aufgrund seiner hohen Leistungsfähigkeit, seines geringen Gewichts und seiner einfachen Herstellung einen Vorteil gegenüber aus dem Stand der Technik im Zusammenschau mit dynamoelektrischen Maschinen bekannten Heatpipes.

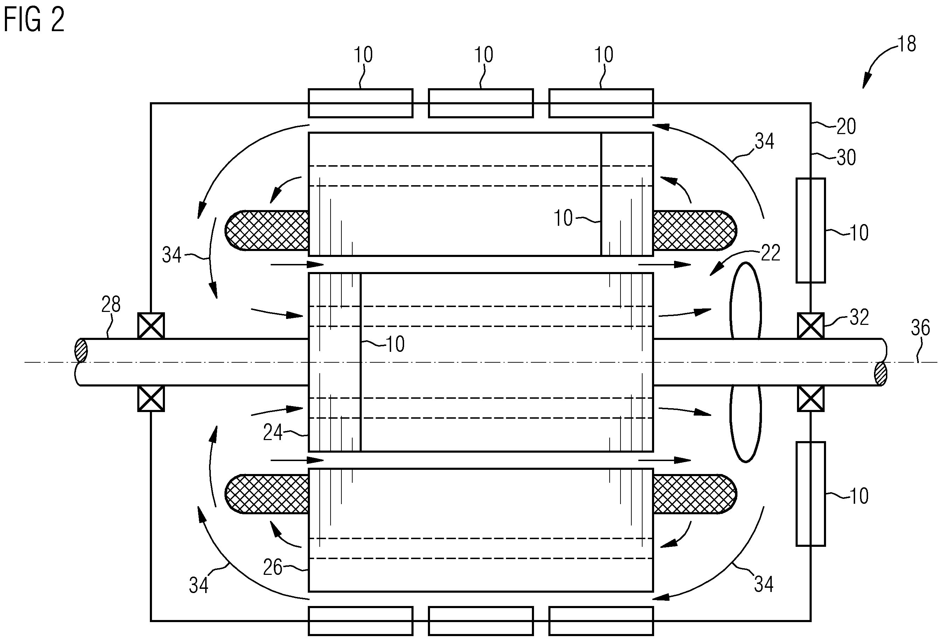

FIG 2 zeigt eine schematische Schnittansicht einer Ausführungsform einer dynamoelektrischen Maschine 18. Die dynamoelektrische Maschine 18 weist zumindest ein Gehäuse 20 sowie eine Motoreinrichtung 22 auf. Es ist dabei vorgesehen, dass an zumindest einer Komponente des Gehäuses 20 und/oder der Motoreinrichtung 22 zumindest ein pulsierendes Wärmerohr 10 angeordnet ist.

Im folgenden Ausführungsbeispiel ist insbesondere ein Rotor 24 sowie ein Stator 26 der dynamoelektrischen Maschine 18 gezeigt.

Die FIG 2 zeigt ferner eine Welle 28 der dynamoelektrischen Maschine 18, ein Lagerschild 30 der dynamoelektrischen Maschine 18 sowie ein Lager 32 der dynamoelektrischen Maschine 18. Ferner sind über Pfeile 34 entsprechende Luftströmungen gezeigt.

Die FIG 2 zeigt insbesondere, dass am Lagerschild 30 und/oder am Lageraußenring 32 und/oder am Rotor 24 und/oder am Stator 26 als Komponente zumindest ein pulsierendes Wärmerohr 10 angeordnet sein kann. Insbesondere ist gezeigt, dass eine Vielzahl von pulsierenden Wärmerohren 10 ausgebildet sein kann, insbesondere an unterschiedlichen Einbauorten der dynamoelektrischen Maschine 18.

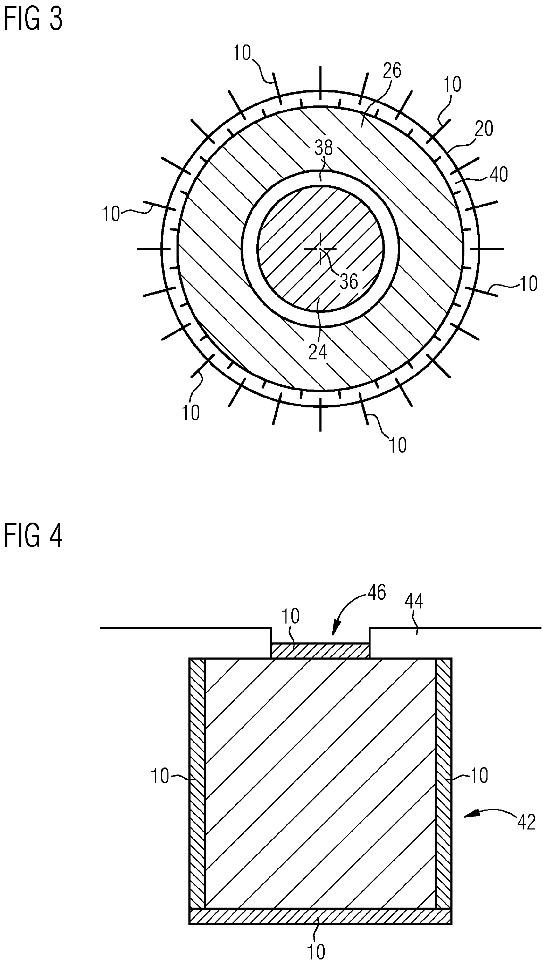

FIG 3 zeigt eine schematische Schnittansicht der dynamoelektrischen Maschine 18. Insbesondere ist gezeigt, dass der Rotor 24 eine Achse 36 aufweisen kann. Insbesondere ist zwischen dem Rotor 24 und dem Stator 26 ein Luftspalt 38 ausgebildet. Am Statorblech können beispielsweise entsprechende Kühlrippen 40 ausgebildet sein. Ferner können eine Vielzahl an pulsierenden Wärmerohren 10 angeordnet werden.

FIG 4 zeigt eine schematische Schnittansicht einer Ausführungsform einer Nut 42 der dynamoelektrischen Maschine 18. Insbesondere ist ein Zahn 44 mit einem Blechpaket gezeigt. Ferner ist ein Nutschlitz 46 gezeigt. Wie in der FIG 4 gezeigt, können unterschiedliche Verortungen des pulsierenden Wärmerohrs 10 an der Nut 42 zu verzeichnen sein. Insbesondere kann das pulsierende Wärmerohr 10 an der Nut 42 als Komponente angeordnet sein. Ferner kann das pulsierende Wärmerohr 10 an einem Nutgrund der Nut 42 und/oder einer Nutwand der Nut 42 ausgebildet sein. Des Weiteren kann auch das pulsierende Wärmerohr 10 an einen Nutverschluss der Nut 42 ausgebildet sein.

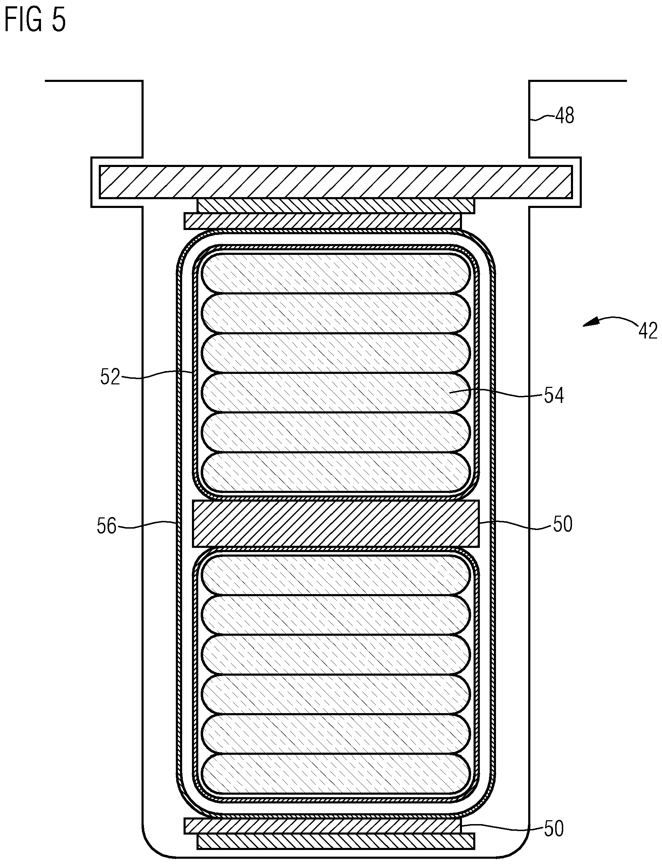

FIG 5 zeigt eine weitere schematische Schnittansicht einer Nut 42. Im vorliegenden Ausführungsbeispiel kann insbesondere ein Nutschlusskeil 48 mit dem pulsierenden Wärmerohr 10 vorgesehen sein. Des Weiteren ist ein Nutfüllstoff 50 vorgesehen, welcher ebenfalls ein pulsierendes Wärmerohr 10 aufweisen kann. Ferner ist eine Hauptisolation 52 gezeigt, wobei zwischen der Hauptisolation 52 und der Nutwand wiederum ein pulsierendes Wärmerohr 10 ausgebildet sein kann. Ferner sind Kupferisolationen 54 gezeigt, wobei zwischen den Teilnuten anstelle der Kupferisolation 54 wiederum auch ein pulsierendes Wärmerohr 10 ausgebildet sein kann. Ferner kann auch eine Nutisolation 56 als pulsierendes Wärmerohr 10 ausgebildet sein.

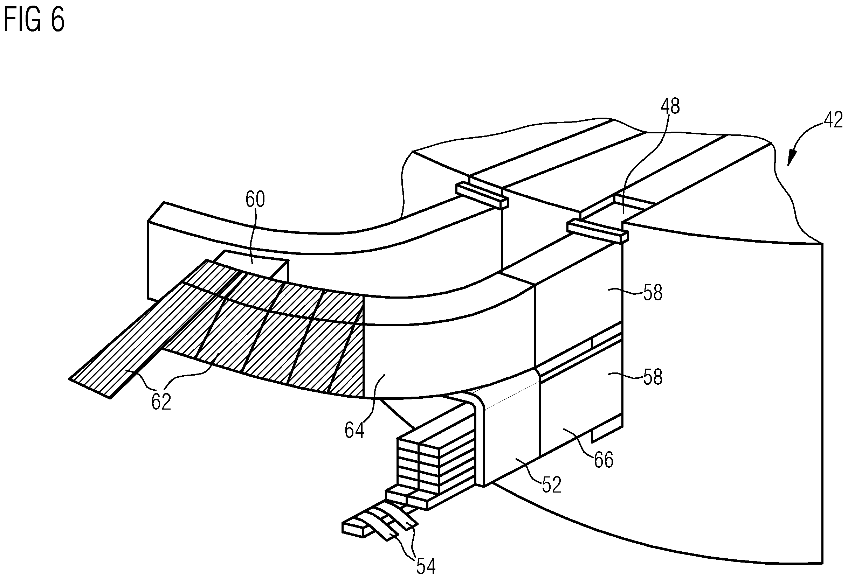

FIG 6 zeigt eine schematische Perspektivansicht einer Nut 42, insbesondere zeigt die FIG 6, dass beispielsweise auch ein Außenglimmschutz 58 mit einem pulsierenden Wärmerohr 10 ausgebildet sein kann. Des Weiteren kann auch eine Versteifung 60 als pulsierendes Wärmerohr 10 ausgebildet sein. Die FIG 6 zeigt ferner ein Glimmerband 62, einen Endenglimmschutz 64 sowie ein Deckband 66.

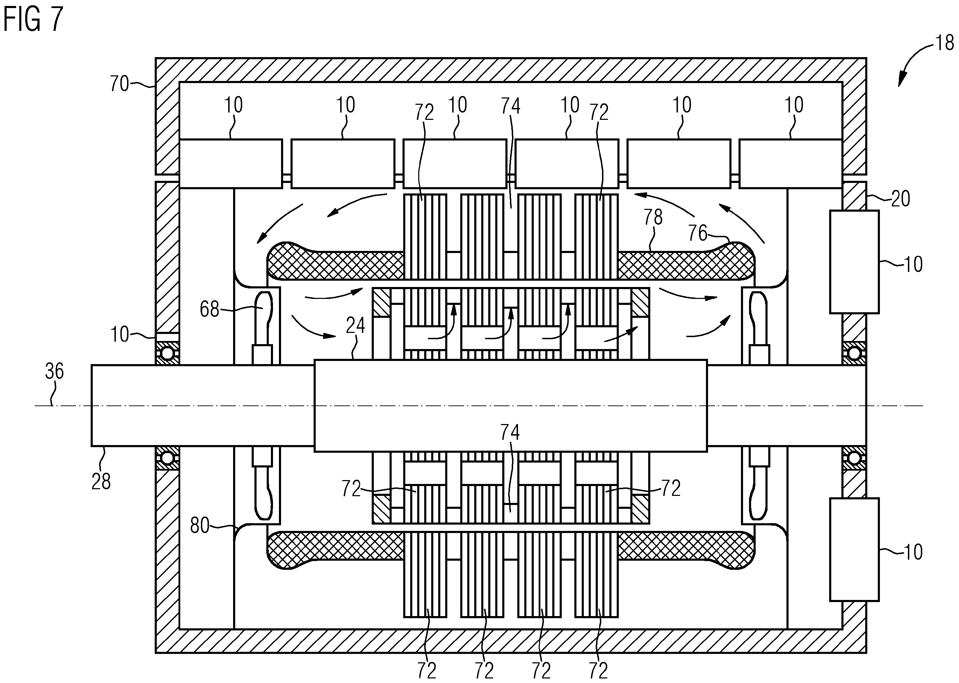

FIG 7 zeigt eine weitere schematische Schnittansicht einer Ausführungsform einer dynamoelektrischen Maschine 18. Im vorliegenden Ausführungsbeispiel ist zusätzlich ein Lüfter 68 gezeigt. Ferner ist gezeigt, dass am Gehäuse 20 beispielsweise ein Sekundärkühler 70 ausgebildet sein kann. Ferner sind Teilblechpakete 72 gezeigt. Ferner zeigt die FIG 7 Kühlspalte 74. Des Weiteren ist ein Wickelkopf 76 mit einem Wicklungssystem 78 gezeigt. Ferner ist ein Leitelement 80 gezeigt.

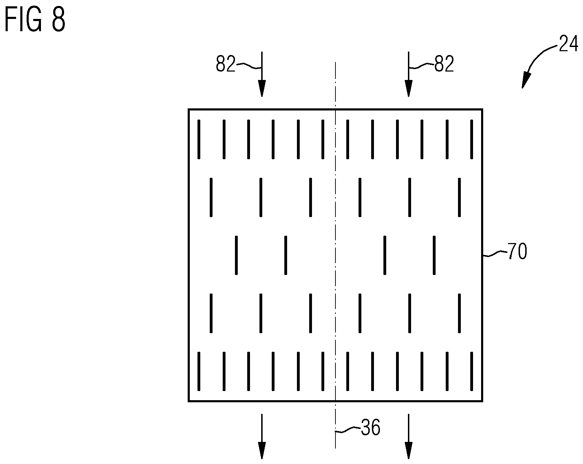

FIG 8 zeigt insbesondere eine schematische Schnittansicht durch eine dynamoelektrische Maschine 18, gemäß der Schnittebene A-A der FIG 7 durch den Sekundärkühler 70. Insbesondere ist Kühlluft 82 gezeigt. Ferner ist der Sekundärkühler 70 vorgesehen. Dabei ist insbeosndere gezeigt, dass die pulsierenden Wärmerohre 10 mit unterschiedlichen Längen und einer unterschiedlichen Dichtverteilung angeordnet werden können.

Insbesondere kann an thermischen Hotspots somit ein spezifisches pulsierendes Wärmerohr 10 angeordnet werden.

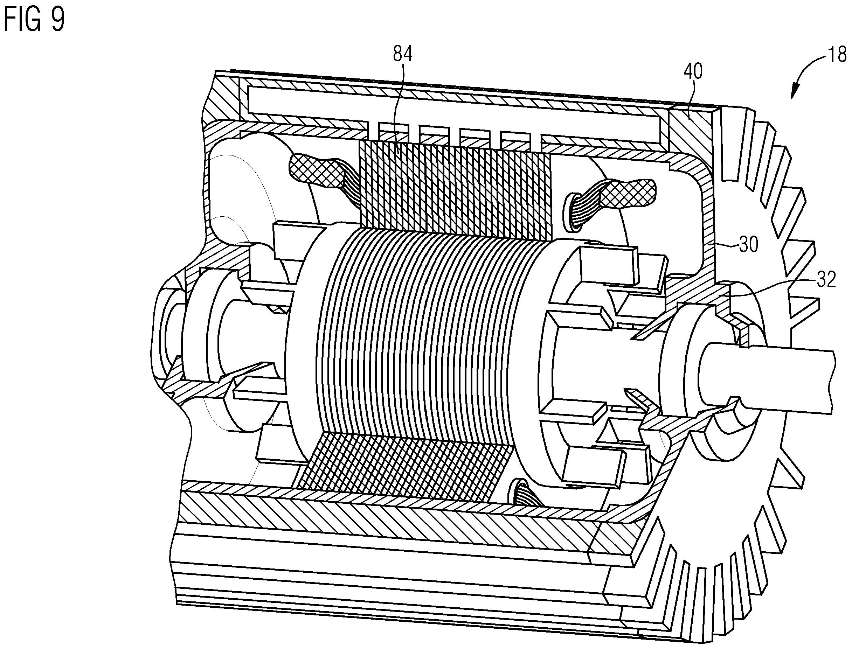

FIG 9 zeigt eine schematische Perspektivansicht einer Ausführungsform der dynamoelektrischen Maschine 18. Vorliegend sind beispielsweise Kühlrippen 40 gezeigt. Hierbei kann ein Blechpaket 84 vorgesehen sein, welches insbesondere das pulsierende Wärmerohr 10 aufweist. Ferner ist das Lagerschild 30 mit einem pulsierenden Wärmerohr 10 sowie der Lageraußenring 32 mit einem pulsierenden Wärmerohr 10 dargestellt.

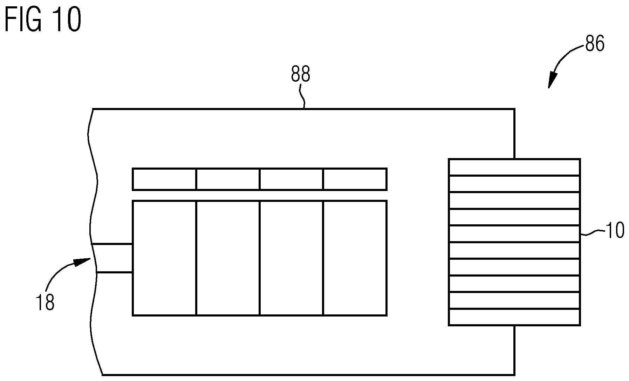

FIG 10 zeigt eine schematische Ansicht einer Schleifringeinrichtung 86. Insbesondere ist ein Schleifring 88 gezeigt, welcher der dynamoelektrischen Maschine 18 zugeordnet ist. Hierbei ist insbesondere vorgesehen, dass auch ein pulsierendes Wärmerohr 10 vorgesehen sein kann.

Des Weiteren kann auch vorgesehen sein, dass das pulsierende Wärmerohr 10 an eine Stromrichtereinrichtung der dynamoelektrischen Maschine 18 als Komponente angeordnet ist, wobei insbesondere das pulsierende Wärmerohr 10 als Kühlzwischenplatte zwischen der Stromrichtereinrichtung und er Motoreinrichtung 22 vorgesehen ist.

## Patentansprüche

1. Dynamoelektrische Maschine (10), mit zumindest einem Gehäuse (20) und mit einer Motoreinrichtung (22), welche in dem Gehäuse (20) aufgenommen ist,
**dadurch gekennzeichnet, dass**
an zumindest einer Komponente des Gehäuses (20) und/oder der Motoreinrichtung (22) zumindest ein pulsierendes Wärmerohr (10) angeordnet ist.

2. Dynamoelektrische Maschine (18) nach Anspruch 1, **dadurch gekennzeichnet, dass**
das pulsierende Wärmerohr (10) plattenförmig oder als gebogene Platte oder als ein einzelnes Rohr ausgebildet ist.

3. Dynamoelektrische Maschine (10) nach Anspruch 1 oder 2, **dadurch gekennzeichnet, dass**
eine Vielzahl von pulsierenden Wärmerohren (10) an einer Vielzahl von unterschiedlichen Komponenten in der dynamoelektrischen Maschine (18) angeordnet ist.

4. Dynamoelektrische Maschine (18) nach einem der vorhergehenden Ansprüche, **dadurch gekennzeichnet, dass**
das pulsierende Wärmerohr (10) bei einer rotierenden Komponente der Motoreinrichtung (22) axial zu einer Rotationsachse der rotierenden Komponente angeordnet ist.

5. Dynamoelektrische Maschine (18) nach einem der vorhergehenden Ansprüche, **dadurch gekennzeichnet, dass**
das pulsierende Wärmerohr (10) an einem Lagerschild (30) der dynamoelektrischen Maschine (18) als Komponente angeordnet ist.

6. Dynamoelektrische Maschine (18) nach einem der vorhergehenden Ansprüche, **dadurch gekennzeichnet, dass**
das pulsierende Wärmerohr (10) an einem Lageraußenring (32) der dynamoelektrischen Maschine (18) als Komponente angeordnet ist.

7. Dynamoelektrische Maschine (18) nach einem der vorhergehenden Ansprüche, **dadurch gekennzeichnet, dass**
das pulsierende Wärmerohr (10) zumindest bereichsweise durch das Gehäuse (20) in eine Umgebung des Gehäuses (20) geführt ist.

8. Dynamoelektrische Maschine (18) nach einem der vorhergehenden Ansprüche, **dadurch gekennzeichnet, dass**
das pulsierende Wärmerohr (10) zwischen einem Blechpaket (44) oder Teilblechpaket (72) eines Stators (26) und/oder Rotors (24) der Motoreinrichtung (22) als Komponente angeordnet ist.

9. Dynamoelektrische Maschine (18) nach einem der vorhergehenden Ansprüche, **dadurch gekennzeichnet, dass**
das pulsierende Wärmerohr (10) an einer Nut (42) der Motoreinrichtung (22) als Komponente angeordnet ist.

10. Dynamoelektrische Maschine (18) nach Anspruch 9, **dadurch gekennzeichnet, dass**
das pulsierende Wärmerohr (10) an einem Nutgrund der Nut (42) und/oder einer Nutwand der Nut (42) ausgebildet ist.

11. Dynamoelektrische Maschine (18) nach einem der vorhergehenden Ansprüche, **dadurch gekennzeichnet, dass**
das pulsierende Wärmerohr (10) als Nutverschluss einer Nut (42) der Motoreinrichtung (22) als Komponente ausgebildet ist.

12. Dynamoelektrische Maschine (18) nach einem der vorhergehenden Ansprüche, **dadurch gekennzeichnet, dass**
das pulsierende Wärmerohr (10) an einer Stromrichtereinrichtung der dynamoelektrischen Maschine (18) als Komponente angeordnet ist.

13. Dynamoelektrische Maschine (18) nach Anspruch 12, **dadurch gekennzeichnet, dass**
das pulsierende Wärmerohr (10) als Kühlzwischenplatte zwischen der Stromrichtereinrichtung und der Motoreinrichtung (22) ausgebildet ist.

14. Dynamoelektrische Maschine (18) nach einem der vorhergehenden Ansprüche, **dadurch gekennzeichnet, dass**
das pulsierende Wärmerohr (10) als ein Wärmetauscher für eine Schleifringeinrichtung (86) der Motoreinrichtung (22) als Komponente ausgebildet ist.

15. Dynamoelektrische Maschine (18) nach einem der vorhergehenden Ansprüche, **dadurch gekennzeichnet, dass**
das pulsierende Wärmerohr (10) ein Ferrofluid aufweist, welches in Abhängigkeit von einem Steuersignal einer elektronischen Recheneinrichtung des pulsierenden Wärmerohrs (10) zu- oder abgeschaltet ist.
